# EUROPEAN PATENT APPLICATION

(11) **EP 2 282 384 A1**
(43) Date of publication of application: **09.02.2011**
(21) Application number: 09382128.8
(22) Date of filing: 30.07.2009
(51) Int. Cl.: H02B 1/03, H02J 13/00

(54) **Management, automation and communications cabinet for an electric power distribution installation**

(71) Applicant: ORMAZABAL PROTECTION & AUTOMATION, S.L.U., 48140 Igorre (Vizcaya) (ES)
(72) Inventor: Baroja Fernández, Hugo, 48140 Igorre (Vizcaya) (ES); Sánchez Ruiz, Juan Antonio, 48140 Igorre (Vizcaya) (ES)
(74) Representative: Carpintero Lopez, Francisco

(57) **Abstract**

The invention relates to a management cabinet (7) for electric power distribution installations, of those comprising a high-voltage part (23), provided with at least one piece of electric equipment (1), at least one control/protection device (3), etc., and a low-voltage part (24), provided with at least one low-voltage switchboard (5) and a plurality of low-voltage consumption measurement apparatuses (22), such that the management cabinet (7) allows carrying out an integral management, remotely or locally, of the entire installation, both of the high-voltage part (23) and of the low-voltage part (24).

## Description

### Object of the Invention

The invention is comprised in the field of electric power distribution and transformation systems and it relates, more specifically, to an installation forming part of electric power distribution networks, which comprises a high-voltage network incorporating a plurality of pieces of high-voltage electric equipment connected to the distribution network and a low-voltage network comprising at least one low-voltage switchboard allowing the distribution of the low-voltage electric power to consumers, elements for controlling and regulating the flow of the electric power and for protecting the system. The present invention relates to a management cabinet which allows carrying out the remote or local control of the entire installation, the measurement of the electric magnitudes of the installation (both in high- and in low-voltage) and the automation of said installation.

### Background of the Invention

The pieces of high-voltage electric equipment or electric power distribution units (commonly referred to as "switchgear") used in electric power distribution installations comprise a switchgear and controlgear performing the corresponding switching and protection functions, i.e., of the switch, disconnector, grounding switch, etc. These switching and protection functions can be automated. Basically, from a functional point of view, it can be stated that this switchgear comprises, on one hand, electric power distribution elements (bars, cables, etc.) and, on the other hand, it can comprise control elements configured to control and/or monitor the state of at least some of said electric power distribution elements, such that the control elements allow controlling the flow of the electric power and thus serving both to control the power distribution and to protect the different elements and pieces of equipment making up the distribution installation.

Electronic control/protection devices can be mentioned among the control elements which can be integrated in said switchgear or units, which devices can perform functions such as, for example, the protection of overcurrent and/or short circuits, the detection of faults, presence and absence of voltage, measurements of electric parameters, etc.

On the other hand, electric power distribution installations can comprises at least one low-voltage switchboard incorporating switching and/or protection elements, allowing the distribution of the low-voltage electric power to the different consumers.

The automation needs in distribution networks, as a result of a greater demand of the supply quality, make the use of pieces of equipment which allow performing supervision and control functions for the distribution network increasingly more necessary and widespread. Likewise, the remote management and automation of the installations, whichever their nature, as a way to increase their reliability and to minimize the maintenance expenses becomes more necessary every day. In this sense, the intention is to cover a wide range of expectations and needs, from the quality of the network and the maintainability of geographically scattered installations (many times in places which are difficult to access, far away or in which qualified personnel is not available) to the assurance of the optimal operation of the entire network, in terms of performance and reliability, to thus minimize the power consumption.

Therefore, in the event that the installation in which the switchgear and controlgear is placed is automated, both for local automation and for remote control, a data concentrator and equipment controller is implemented, which includes the possibility of recording the state of each of the pieces of high-voltage electric equipment or units integrated in the installation (data acquisition and supervision control system), programming sequences of action such as for example the automatic transfer of feeders for minimizing electric power interruptions, in loads supplied by means of transformer substations or distribution centers with more than one incoming feeder, etc. This data concentrator and equipment controller is usually arranged in connection with the assembly of switchgear or units of the installation, more specifically, communicated with at least one electronic control/protection device which is integrated in at least one of said switchgear units.

The electronic control/protection device can be installed in each of the units or switchgear and allows controlling from the installation itself the elements of each unit or switchgear, both through such device and in an automated manner through the data concentrator and equipment controller. The data concentrator and equipment controller can be configured to allow the management or the automated control of the units or switchgear, for example, from a remote control center and to transmit data coming from the units or switchgear towards said remote control center. The communication between the data concentrator and equipment controller and the remote control center can be, for example, through modem, fiber-optic, radio, twisted pair cable, mobile telephony (for example, SMS), PLC, etc.

In this sense, patent application ES2302413A1 can be mentioned, in which the high-voltage part of the installation can be controlled from the remote control center or directly from the data concentrator and equipment controller.

In relation to the low-voltage part of the electric power distribution installation, electric utility companies have started to install measurement apparatuses or electronic meters for new electric power supplies up to a certain contract demand and to substitute electric meters for the old supplies, these new meters having to allow the time discrimination of the measurements, as well as remote management.

Remote management allows electric utility companies to comply with a series of objectives:
- Controlling and improving the quality of the supply
- Reducing the execution time in field trip tasks
- Performing the preactive detection of the anomalies in the supply
- Reducing the complaints associated with taking the reading, since consumption estimations due to the customer not being at home when the reader does his route are reduced
- Using the electric network itself for data transmission (Communication through Power Line Communications - PLC)
- Application of new practices and services (such as pre-payment)
- Changes in the business processes. The actions are not limited to the company spaces, the interaction with the customers can be performed at any time

At the end customer level, an energy saving is obtained with the installation of the new measurement apparatuses, aiding in the improvement of consumption habits. Likewise, the customers benefit from the environmental improvements that this gives rise to and from the increase of competition between the electric utility companies. All this has a positive effect on the quality of the supply, which is more rigorously controlled and assured by the companies.

In relation to the remote management of the low-voltage side of a distribution installation, some examples can be mentioned, such as for example, patents EP1723823B1, EP1548451B1 and EP1456676B1, which define remote reading and control systems for low-voltage measurement apparatuses. These systems only allow performing the connection, disconnection management tasks, etc., of the low-voltage users through the low-voltage measurement apparatuses, using to that end a data concentrator between a Customer Management Center and the low-voltage line feeder of the users, the information usually being transmitted from the meters to the concentrator through PLC (Power Line Communications), and from the concentrator to the Customer Management Center, for example, through a telephone line.

It would be interesting to have a management cabinet which allows carrying out, both locally and remotely, an integral management of the high-voltage part of the installation, such as pieces of high-voltage electric equipment, as well as of the low-voltage part of the installation and knowledge of network parameters, such as for example the management of the consumption of each user of the network, the optimization of the load distribution in the low-voltage switchboard, etc.

### Description of the Invention

The invention relates to a management cabinet for an electric power distribution installation, specifically for an installation comprising:
a high-voltage network comprising a plurality of pieces of high-voltage electric equipment (for example, switchgear or electric power distribution units) comprising electric power distribution elements (for example, bars, fuses, network cable connection, switchgear and controlgear performing the corresponding switching and protection functions, i.e., switch, disconnector, grounding switch, etc., all of them housed within the respective compartments of the switchgear),
a low-voltage network comprising at least one low-voltage switchboard comprising switching and/or protection elements which allows distributing the low-voltage electric power to the different consumers, the low-voltage network comprising at least one measurement apparatus corresponding to at least one low-voltage consumer.

According to the invention, the management cabinet comprises a casing housing
- data transmission and reception means connected to the low-voltage network and configured to receive and transmit low-voltage signals of the low-voltage network
- communication means configured to receive and transmit high-voltage signals of the high-voltage network and low-voltage signals of the data transmission and reception means, the low-voltage signals being isolated with respect to the high-voltage signals, allowing carrying out the integral management of both the pieces of high-voltage electric equipment and a low-voltage network which starts from the low-voltage switchboard, either locally or remotely.

The casing is preferably a metal casing and is connected to the protective grounding of the pieces of high-voltage electric equipment and the data transmission and reception means (which are directly connected to the low-voltage network and therefore are at the low-voltage potential) are electrically insulated from the casing.

The data transmission and reception means can be housed in an enclosure electrically insulated from the casing. To that end, the insulated enclosure can comprise plastic separators or Mylar sheets. In another embodiment, the insulated enclosure housing the data transmission and reception means can be connected to the protective grounding of the pieces of high-voltage electric equipment.

The communication means can be connected to a Remote Control Center and/or Customer Management Center, allowing remotely performing the management of both the pieces of high-voltage electric equipment and the low-voltage network.

The communication means can comprise at least one communications signal transmitter/receiver (such as for example, a modem) connected to at least one switch/router.

Thus, through the management cabinet, and specifically through the communication means, the management or the automated control of the units or switchgear can be performed, for example, from a Remote Control Center and/or Customer Management Center, and data coming from the units or switchgear can be transmitted towards said Remote Control Center and/or Customer Management Center. In this sense, the remote management of the high-voltage part of the installation can be performed, carrying out actions such as the determination of the fault passage, the determination of the direction of the fault passage, the performance of the automatic sectionalization of feeders, the detection of the position of the switch, disconnector or grounding switch of the piece of electric equipment, receiving and/or transmitting a switching order of the switch, the detection of ground faults for each of the phases and the detection of faults between phases, the performance of measurements of current, voltage, powers, etc. All these actions can be performed from the measurement of current and the measurements obtained from the voltage measurement means and the voltage presence/absence indication or detection means, the current measurement means, voltage measurement means and voltage presence/absence indication or detection means being able to be installed integrated in the pieces of high-voltage electric equipment.

The data transmission and reception means can comprise at least one concentrator which is connected to the mentioned at least one low-voltage measurement apparatus, processing the reading of said at least one measurement apparatus corresponding to at least one low-voltage consumer, carrying out the data transmission/reception between said concentrator and said at least one measurement apparatus (for example, by means of a connection through PLC, fiber-optic, radio, modem, etc).

The concentrator can be connected to the switch/router (for example, through Ethernet), allowing the data transmission/reception between the concentrator and said switch/router and, therefore, a continuous data transmission/reception between the remote control center and/or customer management center and each of the low-voltage consumers, as well as the use of electronic measurement apparatuses allowing the time discrimination of the measurements and the adaptation of the measurement to the different rates, which involves an energy saving and an environmental improvement.

The data transmission and reception means can comprise at least one piece of low-voltage measurement equipment connected to the low-voltage network for the measurement of the low-voltage electric magnitudes both of the active and reactive powers of each of the outgoing feeders of the low-voltage switchboard and of the total power of the installation, thus allowing for example knowing how the load distribution is performed in the low-voltage switchboard. The piece of low-voltage measurement equipment obtains the active and reactive powers of each of the outgoing feeders of the low-voltage switchboard, as well as the total power of the installation, from the capture of the currents in each of the outgoing feeders and the phase voltages (R, S, T, N) of the low-voltage switchboard.

To that end, current measurement means which can be integrated in the low-voltage switchboard and voltage measurement means comprised in the piece of low-voltage measurement equipment in an integrated manner are used.

In this sense, the possibility that the low-voltage switchboard comprises protection elements for the protection against overcurrents and short circuit currents, and that said current measurement means comprise sensors installed externally in at least one of the terminals of each of said protection elements, has been contemplated.

The protection elements can comprise direct electrical continuity measurement means between the two terminals of each protection element, such that in the event that there is no electrical continuity between the terminals of the protection elements, the direct electrical continuity measurement means transmit an alarm signal to the communication means.

The data transmission/reception between the mentioned (current and electrical continuity) measurement means and the piece of low-voltage measurement equipment of the management cabinet can be performed wirelessly. Said piece of low-voltage measurement equipment is turn connected to the switch/router, allowing data transmission/reception between said piece of low-voltage measurement equipment and the switch/router, for example through Ethernet.

In an embodiment, the high-voltage network comprises at least one electronic control/protection device configured to control the state of at least one of said electric power distribution elements, and/or at least one data concentrator and equipment controller common to all the pieces of electric equipment of the high-voltage network and acting on the control/protection devices or directly on the distribution elements themselves. The data concentrator and equipment controller or at least one control/protection device is connected to the communication means, allowing performing remote control applications (for example, from a Remote Control Center and/or Customer Management Center) of the high-voltage electric power distribution network through the management cabinet, implementing the control and the supervision of each piece of electric equipment.

The pieces of high-voltage electric equipment can comprise in an integrated manner current measurement means, voltage measurement means and voltage presence/absence indication or detection means.

The measurement of current, together with the measurements obtained from the voltage measurement means and the voltage presence/absence indication or detection means, allows determining the fault passage, determining the direction of the fault passage, and accordingly, performing the automatic sectionalization of feeders.

Both the data concentrator and equipment controller and the control/protection device additionally comprise means for detecting the position of the switch, disconnector or grounding switch of the piece of high-voltage electric equipment in which it is installed, means for receiving and/or transmitting a switching order of the switch, means for receiving temperature, pressure, liquid level control and measurement signals, recording means for the storage of the detected defects, as well as of the different configuration parameters, means for detecting ground faults for each of the phases and for detecting faults between phases, means for measuring the instantaneous values of voltage and current, powers, means for calculating the effective values of the currents and voltages of each phase, means for determining homopolar voltages and currents, energies, powers, etc.

The use of the management cabinet enables carrying out, both locally and remotely, an integral management of the high-voltage part of the installation, such as the pieces of high-voltage electric equipment, as well as of the low-voltage part of the installation and knowledge of network parameters, such as for example the management of the consumption of each user of the network, the optimization of the load distribution in the low-voltage switchboard, etc.

In short, the use of the management cabinet allows reaching a series of advantages, both for the electric utility companies and for their customers, as important as the control and the improvement of the quality of the supply, the reduction of the execution time in field trip tasks, the interaction with the customers at any time, the energy saving and the environmental improvement, etc.

The management cabinet object of the invention can in turn incorporate a three-phase supply block comprising at least one three-phase or single-phase isolation transformer, to the primary side of which at least one of the phases (R, S, T, N) of the low-voltage switchboard is connected. The communication means, the concentrator and the piece of low-voltage measurement equipment, as well as the control/protection device in some cases (in the event that there is no data concentrator and equipment controller in the installation), are directly supplied through the secondary side of at least one isolation transformer. On the other hand, the three-phase supply block comprises a battery charger which is connected to the secondary side of at least one isolation transformer and to at least one battery, the communication means, the concentrator, the piece of low-voltage measurement equipment, as well as the control/protection device (in the event that there is no data concentrator and equipment controller in the installation) are supplied through the battery in the event that the three phases (R, S, T) of the low-voltage switchboard are out of service.

The possibility that the protection elements of the low-voltage switchboard can comprise means allowing the direct measurement of the electrical continuity between the terminals of each protection element, such that a measurement of non-electrical continuity between the mentioned terminals is an event indicating that the protection element has been damaged or has blown out, this fault event being able to be seen or detected from the Remote Control Center and/or Customer Management Center and/or by another device of the installation through the management cabinet, has also been contemplated. The installation can furthermore incorporate at least one control element for monitoring alarms of the electric distribution installation, referring to the entrance of water, smoke, temperatures, blown protection element, etc., connected to the management cabinet.

Finally, the management cabinet comprises at least one compartment, such that it can be structured in two compartments, one for housing the communication means and the other one for housing the concentrator, the piece of low-voltage measurement equipment and the three-phase supply block.

### Description of the Drawings

To complement the description and for the purpose of aiding to better understand the features of the invention according to a preferred practical embodiment thereof, a set of drawings is attached as an integral part of said description, in which the following has been depicted with an illustrative and nonlimiting character:
Figure 1 schematically depicts an electric power distribution installation according to a possible embodiment of the invention.
Figure 2 schematically depicts an electric power distribution installation according to another possible embodiment of the invention.
Figure 3 depicts a perspective view of the management cabinet (7) object of the invention.
Figure 4 depicts a perspective view of a switching/protection element (6) of the low-voltage switchboard (5), in which a current measurement means (12) is arranged on a terminal of said element (6).

### Preferred Embodiment of the Invention

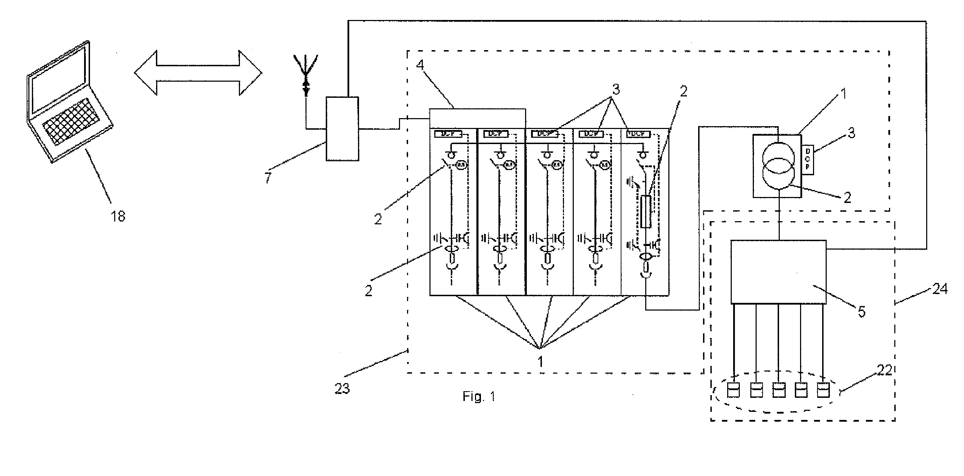

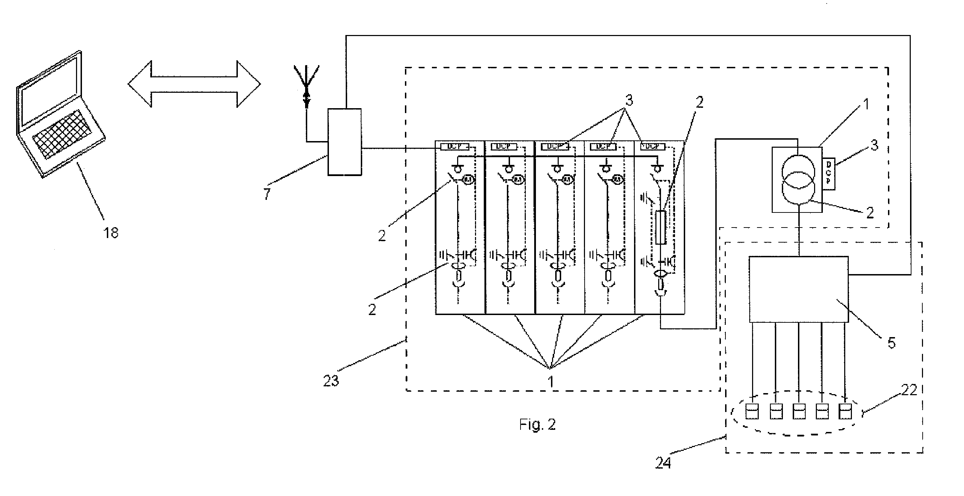

The management cabinet (7) object of the present invention is applicable in electric power distribution installations, such as an electric transformer substation or a distribution center, said installation comprising a plurality of pieces of high-voltage electric equipment (1) referred to as switchgear or electric power distribution units and at least one low-voltage switchboard (5), as shown in Figures 1 and 2.

At least one of these switchgear units (1) comprises an electronic control/protection device (3) configured to control the state of at least some electric power distribution elements (2) comprised in the switchgear (1), such as for example the switch, disconnector, grounding switch, etc. The electronic control/protection device (3) can be communicated with a data concentrator and equipment controller (4) common to all the switchgear units (1), which can be installed in the installation itself, as can be seen in Figure 1. The electronic control/protection device (3) is installed in at least one of the switchgear units (1) and allows controlling from the installation itself electric power distribution elements (2) of each switchgear unit (1), both through such device and in an automated manner through the data concentrator and equipment controller (4). The data concentrator and equipment controller (4) can be configured to allow the automated control of the switchgear (1), for example, from a Remote Control Center and/or Customer Management Center (18) and to transmit data coming from the switchgear (1) towards said Remote Control Center and/or Customer Management Center (18).

The low-voltage switchboard (5) of the installation comprises switching and/or protection elements (6), such as for example switch, disconnector, fuses, etc., and allows distributing the low-voltage electric power to the different consumers.

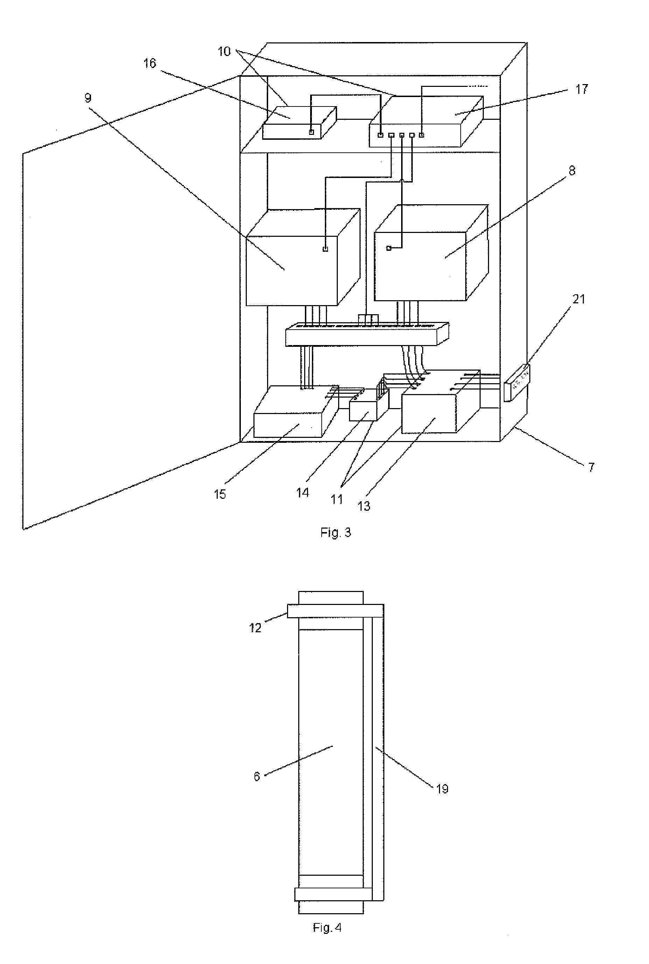

According to the invention, by means of the management cabinet (7) the integral management of both the high-voltage network (23) of the installation and the low-voltage network (24) can be performed. In this sense, the management cabinet (7) comprises communication means (10), provided with at least one communications signal transmitter/receiver (16), such as for example a modem, and at least one switch/router (17), as shown in Figure 3. Through the management cabinet (7), and specifically through the communication means (10), the distribution installation, both the high-voltage network (23) and the low-voltage network (24), can be managed remotely from a Remote Control Center and/or Customer Management Center (18).

For the management of the high-voltage network (23) of the installation, the switch/router (17) is connected to at least one control/protection device (3) or with the data concentrator and equipment controller (4), such that functions such as the determination of the fault passage, the determination of the direction of the fault passage, the performance of the automatic sectionalization of feeders, the detection of the position of the switch, disconnector or grounding switch of the piece of electric equipment (1), receiving and/or transmitting a switching order of the switch, the detection of ground faults for each of the phases and the detection of faults between phases, the performance of measurements of current, voltage, powers, etc., can be carried out remotely from a Remote Control Center and/or Customer Management Center (18). All these functions can be performed from the measurement of current and the measurements obtained from the voltage measurement means and the voltage presence/absence indication or detection means, the current measurement means, voltage measurement means and voltage presence/absence indication or detection means being able to be installed in an integrated manner in the pieces of high-voltage electric equipment (1).

The management cabinet (7) comprises a metal casing which is referred to the same grounding as the high-voltage network (23) of the installation, all the pieces of equipment inside the management cabinet (7) and connected directly to the BT network are isolated from the metal parts (for example, the casing), for example by means of plastic separators for profiles, Mylar sheets, etc. or are at the protective grounding potential.

For the management of the low-voltage network (24) of the installation, as observed in Figures 1-3, the management cabinet (7) comprises at least one concentrator (8) processing the readings of the measurement apparatuses (22) of each of the low-voltage consumers. Continuous data transmission/reception between each measurement apparatus (22) and the concentrator (8) is allowed to be carried out by means of a connection through PLC, fiber-optic, radio, modem, etc. This concentrator (8) is turn connected to the switch/router (17), this connection being able to be through Ethernet. A continuous data transmission/reception between a Remote Control Center and/or Customer Management Center (18) and each of the low-voltage consumers is thus enabled, reducing the complaints associated with taking the reading, since consumption estimations due to the customer not being at home when the reader does his route are reduced, enabling applications of new practices and services, such as pre-payment, etc.

On the other hand, as shown in Figure 3, the management cabinet (7) comprises at least one piece of low-voltage measurement equipment (9) which carries out the measurement of both the active and reactive powers of each of the outgoing feeders of the low-voltage switchboard (5) and of the total power of the installation, thus allowing for example knowing how the load distribution is performed in the low-voltage switchboard (5) and being able to optimize said load distribution. These measurements are obtained from the capture of the currents and the phase voltages (R, S, T, N) of the low-voltage switchboard (5), using to that end current measurement means (12) which can be installed in an integrated manner in the low-voltage switchboard (5) and voltage measurement means comprised in the piece of low-voltage measurement equipment (9) in an integrated manner.

In this sense, as observed in Figure 4, the possibility that the current measurement means (12) can consist of sensors installed externally in at least one of the terminals of each of the protection elements (6) comprised in the low-voltage switchboard (5), such as the fuses for example, has been contemplated. The data transmission/reception between the mentioned measurement means (12) and the piece of low-voltage measurement equipment (9) of the management cabinet (7) can be performed wirelessly. Said piece of low-voltage measurement equipment (9) is in turn connected to the switch/router (17), this connection being able to be through Ethernet. A continuous data transmission/reception between a Remote Control Center and/or Customer Management Center (18) and the low-voltage part (24) of the electric power distribution installation is thus enabled.

As can be seen in Figure 3, the management cabinet (7) is complemented with a three-phase supply block (11) comprising at least one three-phase or single-phase isolation transformer (13), to the primary side of which at least one of the phases (R, S, T, N) of the low-voltage switchboard (5) is connected. The communication means (10), the concentrator (8) and the piece of low-voltage measurement equipment (9), as well as the control/protection device (3) in some cases (in the event that there is no data concentrator and equipment controller (4) in the installation), are supplied directly through the secondary side of at least one isolation transformer (13). On the other hand, the three-phase supply block (11) comprises a battery charger (14) which is connected to the secondary side of at least one isolation transformer (13) and to at least one battery (15), the communication means (10), the concentrator (8), the piece of low-voltage measurement equipment (9), as well as the control/protection device (3) (in the event that there is no data concentrator and equipment controller (4) in the installation) being supplied through the battery (15) in the event that the three phases (R, S, T) of the low-voltage switchboard (5) are out of service.

In the mentioned Figure 3 it can be observed how the management cabinet (7) also comprises a connector (21) serving to supply therethrough the control/protection devices (3) when there is no data concentrator and equipment controller (4) in the installation, or to connect the data concentrator and equipment controller (4) and thus supply the management cabinet (7) from said data concentrator and equipment controller (4) and use the communication means (10) of the management cabinet (7).

The same Figure 3 shows how the management cabinet (7) comprises at least one compartment, such that it can be structured in two compartments, one for housing the communication means (10) and the other one for housing the concentrator (8), the piece of low-voltage measurement equipment (9) and the three-phase supply block (11).

Finally, as shown in Figure 4, the possibility that the protection elements (6) of the low-voltage switchboard (5) can comprise means (19) allowing the direct measurement of the electrical continuity between the terminals of each protection element (6), such that a measurement of non-electrical continuity between the mentioned terminals is an event indicating that the protection element (6) has been damaged or has blown out, this fault event being able to be seen or detected from the Remote Control Center and/or Customer Management Center (18) through the management cabinet (7), has also been contemplated.

The reference numbers used in this text represent the following elements:
1.- Pieces of high-voltage electric equipment or switchgear.
2.- Electric power distribution elements
3.- Control/protection device
4.- Data concentrator and equipment controller
5.- Low-voltage switchboard
6.- Switching and/or protection elements
7.- Management cabinet
8.- Concentrator
9.- Piece of low-voltage measurement equipment
10.- Communication means
11.- Three-phase supply block
12.- Current measurement means integrated in the low-voltage switchboard (5)
13.- Isolation transformer
14.- Battery charger
15.- Battery/batteries
16.- Communications signal transmitter/receiver
17.- Switch/router.
18.- Remote Control Center and/or Customer Management Center
19.- Electrical continuity measurement means
21.- Connector between the data concentrator and equipment controller (4) and the management cabinet (7)
22.- Measurement apparatuses for low-voltage electric power consumers
23.- High-voltage network of the electric power distribution installation
24.- Low-voltage network of the electric power distribution installation

In this text, the word "comprises" and its variants (such as "comprising", etc.) must not be interpreted in an exclusive manner, i.e., they do not exclude the possibility that what has been described can include other elements, steps, etc.

On the other hand, the invention it not limited to the specific embodiments which have been described but also includes the variants which can be made by the person having ordinary skill in the art (for example, in relation to the choice of materials, dimensions, components, configuration, etc.), within what is inferred from the claims.

## Claims

1. Management cabinet for an electric power distribution installation, said installation comprising:
a high-voltage network (23) comprising a plurality of pieces of high-voltage electric equipment (1) comprising electric power distribution elements (2),
a low-voltage network (24) comprising at least one low-voltage switchboard (5) comprising switching and/or protection elements (6) which allows distributing the low-voltage electric power to the different consumers, the low-voltage network (24) comprising at least one measurement apparatus (22) corresponding to at least one low-voltage consumer,
**characterized in that** the management cabinet (7) comprises a casing (7') housing
- data transmission and reception means (8,9) connected to the low-voltage network (24) and configured to receive and transmit low-voltage signals of the low-voltage network(24)
- communication means (10) configured to receive and transmit high-voltage signals of the high-voltage network (23) and low-voltage signals of the data transmission and reception means (8,9), the low-voltage signals being isolated with respect to the high-voltage signals, allowing carrying out the integral management of both the pieces of high-voltage electric equipment (1) and a low-voltage network which starts from the low-voltage switchboard (5), either locally or remotely.

2. Management cabinet according to claim 1, wherein the casing (7') is connected to the protective grounding of the pieces of high-voltage electric equipment (1) and in that the data transmission and reception means (8,9) are electrically insulated from the casing (7').

3. Management cabinet according to claim 2, wherein the data transmission and reception means (8, 9) are housed in an enclosure electrically insulated from the casing (7').

4. Management cabinet according to claim 3, wherein the mentioned enclosure housing the data transmission and reception means (8, 9) is connected to the protective grounding of the pieces of high-voltage electric equipment (1).

5. Management cabinet according to claim 1 or 2, wherein the communications means (10) are connected to a Remote Control Center and/or Customer Management Center (18), allowing remotely performing the management of both the pieces of high-voltage electric equipment (1) and the low-voltage network (24).

6. Remote Management cabinet according to claim 5, wherein the communication means (10) comprise at least one communications signal transmitter/receiver (16) connected to at least one switch/router (17).

7. Management cabinet according to claim 1, wherein the data transmission and reception means comprise at least one concentrator (8) which is connected to the mentioned at least one low-voltage measurement apparatus (22), processing the reading of said at least one measurement apparatus (22) corresponding to at least one low-voltage consumer, carrying out the data transmission/reception between said concentrator (8) and said at least one measurement apparatus (22).

8. Management cabinet according to claim 7, wherein the concentrator (8) is connected to the switch/router (17), allowing the data transmission/reception between the concentrator (8) and said switch/router (17).

9. Management cabinet according to claim 1, wherein the data transmission and reception means comprise at least one piece of low-voltage measurement equipment (9) connected to the low-voltage network (24) for the measurement of both the active and reactive powers of each of the outgoing feeders of the low-voltage switchboard (5) and of the total power of the installation, and in that the piece of low-voltage measurement equipment (9) obtains the active and reactive powers of each of the outgoing feeders of the low-voltage switchboard (5), as well as the total power of the installation, from the capture of the currents in each of the outgoing feeders and the phase voltages (R, S, T, N) of the low-voltage switchboard (5).

10. Management cabinet according to claim 9, according to which the low-voltage switchboard (5) comprises current measurement means (12) in an integrated manner.

11. Management cabinet according to claim 10, according to which the low-voltage switchboard (5) comprises protection elements (6) for the protection against overcurrents and short circuit currents, and in that said current measurement means (12) comprise sensors installed externally in at least one of the terminals of each of said protection elements (6).

12. Management cabinet according to claim 9, according to which the piece of low-voltage measurement equipment (9) comprises voltage measurement means in an integrated manner.

13. Management cabinet according to claim 9, according to which the piece of low-voltage measurement equipment (9) is connected to the switch/router (17), allowing the data transmission/reception between said piece of low-voltage measurement equipment (9) and the switch/router (17).

14. Management cabinet according to claim 1, according to which the electric power distribution installation comprises at least one electronic control/protection device (3) configured to control the state of at least one of said electric power distribution elements (2) and/or at least one data concentrator and equipment controller (4) common to all the pieces of electric equipment (1) of the installation and acting on the control/protection devices (3) or directly on the distribution elements (2) themselves, and in that the data concentrator and equipment controller (4) or at least one control/protection device (3) is connected to the communication means (10), allowing performing remote control applications of the electric power distribution installation through the management cabinet (7), implementing the control and the supervision of each piece of electric equipment (1).

15. Management cabinet according to claim 14, according to which the pieces of electric equipment (1) comprise current measurement means, voltage measurement means and voltage presence/absence indication or detection means in an integrated manner.

16. Management cabinet according to claim 15, according to which the measurement of current, together with the measurements obtained from the voltage measurement means and the voltage presence/absence indication or detection means, allows determining the fault passage, determining the direction of the fault passage, and accordingly, performing the automatic sectionalization of feeders.

17. Management cabinet according to claim 14, **characterized in that** both the data concentrator and equipment controller (4) and the control/protection device (3) additionally comprise means for detecting the position of the switch, disconnector or grounding switch of the piece of electric equipment (1) in which it is installed, means for receiving and/or transmitting a switching order of the switch, means for receiving temperature, pressure, liquid level control and measurement signals, recording means for the storage of the detected defects, as well as of the different configuration parameters, means for detecting ground faults for each of the phases and for detecting faults between phases, means for measuring the instantaneous values of voltage and current, powers, means for calculating the effective values of the currents and voltages of each phase, means for determining homopolar voltages and currents, energies, powers, etc.

18. Management cabinet according to claim 11, according to which the protection elements (6) comprise direct electrical continuity measurement means (19) between the two terminals of each protection element (6), such that in the event that there is no electrical continuity between the terminals of the protection elements (6), the direct electrical continuity measurement means (19) transmit an alarm signal to the communication means (10).

19. Management cabinet according to claim 1, comprising a three-phase supply block (11) allowing the supply of the communication means (10), concentrator (8), piece of low-voltage measurement equipment (9) and/or the control/protection device (3).

20. Management cabinet according to claim 19, wherein the three-phase supply block (11) comprises a three-phase isolation transformer (13) to the primary side of which the phases (R, S, T, N) of the low-voltage switchboard (5) are connected.

21. Management cabinet according to claim 19, wherein the three-phase supply block (11) comprises at least one single-phase isolation transformer (13) to the primary side of which at least one of the phases (R, S, T, N) of the low-voltage switchboard (5) is connected.

22. Management cabinet according to claim 20 or 21, **characterized in that** the communication means (10), concentrator (8), piece of low-voltage measurement equipment (9) and the control/protection device (3) are supplied directly through the secondary side of at least one isolation transformer (13).

23. Management cabinet according to claim 20 or 21, **characterized in that** the secondary side of at least one isolation transformer (13) is connected to a battery charger (14) forming part of the three-phase supply block (11), and **in that** the management cabinet (7) comprises at least one battery (15) connected to the battery charger (14), such that the communication means (10), concentrator (8), piece of measurement equipment (9), as well as the control/protection device (3), are supplied through the battery (15) in the event that the three phases (R, S, T) of the low-voltage switchboard (5) are out of service.

24. Management cabinet according to any of the previous claims, according to which the distribution installation comprises at least one control element for monitoring alarms of the electric distribution installation, referring to the entrance of water, smoke, temperatures or blown protection element, said control element being connected to the management cabinet (7).

25. Management cabinet according to claim 14, **characterized in that** the connection between the management cabinet (7) and the data concentrator and equipment controller (4) is performed through a connector (21).
